# EUROPÄISCHE PATENTSCHRIFT

(11) **EP 0 637 028 B1**
(45) Veröffentlichungstag und Bekanntmachung des Hinweises auf die Patenterteilung: **12.05.1999**
(21) Anmeldenummer: 94111590.9
(22) Anmeldetag: 25.07.1994
(51) Int. Cl.: G11B 33/04

(54) **Halter für CD's**
Container for compact discs
Réceptacle pour disques compacts

(30) Priorität: 27.07.1993 DE 9311229 U
(43) Veröffentlichungstag der Anmeldung: 01.02.1995
(73) Patentinhaber: Grosch, Robert, D-80804 München (DE)
(72) Erfinder: Grosch, Robert, D-80804 München (DE)
(74) Vertreter: Alber, Norbert, Dipl.-Ing.

(56) Entgegenhaltungen:
- WO-A-92/03823
- DE-U- 8 624 257
- DE-U- 8 702 181
- DE-U- 9 107 451
- US-A- 4 928 816
- US-A- 5 097 946

## Beschreibung

Die Erfindung betrifft einen Halter für die Klapphüllen von Compact-Discs, sogenannten CD's. Es sind unterschiedliche Halter für CD's bekannt, in denen eine Vielzahl von CD's, genauer gesagt, die CD's aufnehmenden, in ihren Abmessungen genormten, Klapphüllen, meist waagerecht übereinander gestapelt werden können, indem sie in entsprechende Schlitze oder angepaßte Ausnehmungen eingeschoben werden können.

Beispielsweise ist es aus der WO-A-92/03823 bekannt, die Klapphüllen von z. B. CDs an einer ihrer Seiten mit einem schwenkbaren Kragarm formschlüssig zu verbinden, wobei eine Vielzahl solcher Kragarme entlang einer horizontalen Achse verschwenkbar sind. Da neben den Kragarmen eine Klapphülle eingehängt ist, und die Kragarme in der Ruhestellung horizontal stehen, ergibt dies einen Block aus senkrechtstehenden, aneinandergereihten CD-Hüllen, welcher auf den vom Kragarm abgewandten Seitenflächen der Vielzahl von CD-Hüllen selbsttätig steht.

Zum Entnehmen einer CD wird der Kragarm mit der entsprechenden Klapphülle senkrecht nach oben geschwenkt und dann die Klapphülle konventionell, also durch Benutzung beider Hände, geöffnet.

Die Öffnung mit nur einer Hand ist nicht möglich, da zum einen aufgrund der vertikalen Anordnung der Klapphülle die Schwerkraft nicht auf diese einwirkt und zum anderen nur eine Seitenkante des Deckels der Klapphülle durch den Kragarm in ihrer Lage fixiert wird.

Aus der US-A-4 928 816 ist weiterhin ein Ständer für Klapphüllen bekannt, in dem die Klapphüllen im oberen Bereich des Ständers nebeneinander senkrechtstehend abgelegt werden.

Zum Öffnen wird eine solche Klapphülle von dort entnommen und im wesentlichen waagerecht in den unteren Bereich des CD-Ständers eingeschoben, wodurch die Klapphülle entlang ihrer Seitenkanten gehalten und durch Drücken auf die Mitte des Deckels der Klapphülle geöffnet werden kann, indem dann der Boden der Klapphülle nach unten aufklappt.

Einen kompakten Ständer, bei dem eine derartige Einhandöffnung möglich ist, ohne die jeweilige Klapphülle erst in eine spezielle, hierfür präparierte Vorrichtung einzubringen, ist hier nicht offenbart.

Die Aufgabe der vorliegenden Erfindung besteht darin, einen sowohl formschönen als auch platzsparenden Halter zu schaffen, der zusätzlich das Öffnen der in ihm aufgenommenen Klapphüllen zum Entnehmen der CD's vereinfacht und erleichtert.

Diese Aufgabe wird durch die Gegenstände der Ansprüche 1 und 2 gelöst. Vorteilhafte Ausführungsformen ergeben sich aus den Unteransprüchen.

Zwar sind auch bisher schon Halter für CD's bekannt, bei denen einzelne Halterahmen, auch beweglich, miteinander zu einem meist in der Kapazität beliebig erweiterbaren Halter zusammengesetzt werden können. Jedoch muß zum Entnehmen der CD's immer die gesamte Klapphülle der CD aus dem Halterahmen und damit dem Halter entnommen und die Klapphülle durch Ergreifen des Deckelteiles mit der einen Hand und des Bodenteiles mit der anderen Hand aufgeklappt werden.

Durch die erfindungsgemäße Ausbildung der Halterahmen ist jedoch ein Öffnen der Klapphüllen zum Entnehmen der CD mit einer Hand, ja sogar mit einem einzigen Finger möglich und zwar ohne die Klapphülle aus dem Halter zu entnehmen:

Es muß lediglich der Halterahmen der betreffenden Klapphülle in eine solche Lage gegenüber dem restlichen Halter gebracht werden, daß der Raum unterhalb des Halterahmens frei ist.

Die Klapphülle wird dabei im Halterahmen gehalten, indem in das oben liegende Deckelteil Vorsprünge in die im Deckelteil vorhandenen Durchbrüche eingreifen. Diese Durchbrüche des Deckelteiles sind dort vorhanden, um bei den im Spritzgußverfahren hergestellten Teilen der Klapphülle durch diese Durchbrüche während der Herstellung einen beweglichen Teil, den sogenannten Schieber, der mehrteiligen Spritzgußform eindringen zu lassen, was zur Ausbildung von in das Innere des Deckelteiles ragenden Vorsprüngen des Deckelteiles notwendig ist. Diese Vorsprünge wiederum sind zur Aufnahme der aus Papier oder Pappe bestehenden, bedruckten Titelblätter der CD notwendig.

Eine alternative, von dem Vorhandensein von Durchbrüchen im Deckelteil unabhängige Möglichkeit zum Festhalten des Deckelteiles besteht darin, den Deckelteil der CD mit Hilfe von Saugnäpfen, Druckknöpfen, Klettstreifen oder ähnlichen Einrichtungen am Halterahmen festzuhalten.

Eine entsprechend obiger Möglichkeiten im Halterahmen gehaltene Klapphülle kann nun mit einem einzigen Finger geöffnet werden, indem der Benutzer auf die Oberseite der Klapphülle, also deren Deckelteil, im Bereich der Mitte der vorderen, zu öffnenden Kante drückt. Dadurch biegt sich die Deckelplatte des Deckelteiles aufgrund ihrer Elastizität durch und drückt die senkrecht stehende und damit so gut wie unelastische Vorderwand des Bodenteiles so weit nach unten, daß die Rastverbindung, die zwischen den Seitenwänden des Bodenteiles und den diese umschließenden Seitenwände des Deckelteiles besteht, ausrastet, und das Bodenteil nach unten wegklappt, und nur der Deckelteil der Klapphülle von der Halteeinrichtung gehalten wird. Das Bodenteil wird dabei federnd abgefangen, etwa durch ein an der Unterseite des Halterahmens angeordnetes Federplättchen, welches waagerecht unter die Klapphülle hineinragt.

Damit ist die Klapphülle offen und die CD kann problemlos entnommen werden, während die aufgeklappte Klapphülle weiterhin im Halterahmen verbleibt.

Zum Einlegen bzw. Entnehmen der Klapphülle in den Halterahmen ist es notwendig, daß der Halterahmen aus seiner die Klapphülle durch Eindringen der Vorsprünge haltenden Ruheposition wenigstens teilweise in eine geöffnete Position bringbar ist, in der diese Vorsprünge nicht mehr in die Durchbrüche der Klapphülle eingreifen und damit ein Entfernen oder neu Einbringen möglich ist.

Zu diesem Zweck besteht der Halterahmen vorteilhafterweise aus zwei außen entlang der Seitenwände der Klapphülle verlaufender Seitenschenkel, die entweder an einem Gehäuse des einzelnen Halterahmens oder des gesamten Halters befestigt sind, wobei einer der Seitenschenkel gegenüber dem anderen parallel oder um eine Schwenkachse herum so weit verlagert werden kann, daß die Klapphülle nicht mehr formschlüssig im Halterahmen 2 gehalten wird.

Die beweglichen Teile, also etwa die Seitenschenkel, der Halterahmen können dabei entweder mittels separater Federn, mittels Materialelastizität oder mittels anderer physikalischer Effekte wie Magnetismus etc. in Richtung der Ruheposition kraftbeaufschlagt werden.

Dabei ist die Lösung mittels Materialelastizität zu bevorzugen, da sich hieraus eine einfache und vorzugsweise einstückige Ausbildung des gesamten Halterahmens erreichen läßt.

Bei einer bevorzugten Ausführungsform der Erfindung besteht der Halterahmen aus zwei Seitenschenkel und einem diese Seitenschenkel verbindenden, auf der Rückseite der Klapphülle, also benachbart zu deren Achse, verlaufenden, verbindenden Schenkel, wobei einer der Seitenschenkel um eine senkrecht zum Halterahmen verlaufende Schwenkachse gegenüber dem Rest des Halterahmens geringfügig verschwenkt werden kann, um die Vorsprünge der Seitenschenkel außer Eingriff von der Klapphülle zu bringen. Dabei kann entweder eine Feder im verbindenden Schenkel den beweglichen Seitenschenkel kraftbeaufschlagen, oder eine um die Schwenkachse herum angeordnete Spiralfeder.

Dabei bestehen die Seitenschenkel im wesentlichen aus einem Winkelprofil, dessen senkrecht verlaufende Strebe an den Außenflächen des Deckelteiles der Klapphülle der CD anliegt und das in die Klapphülle eindringende Vorsprünge trägt, während die waagerechte Strebe auf der Oberseite des Deckelteiles der Klapphülle der CD in deren Randbereichen verläuft.

Bei einer einstückigen Ausbildung des Halterahmens kann der verbindende Schenkel aus einem etwa die gesamte Höhe der Klapphülle umfassenden massiven Kunststoffriegel bestehen, während die winkelprofilförmigen Seitenschenkel im Bereich ihres Überganges in den verbindenden Querschenkel nur die senkrechte Strebe und keine waagerechte Strebe aufweisen. Dadurch sind die Seitenschenkel bei entsprechender Dimensionierung der senkrechten Strebe im Bereich des Überganges zum verbindenden Schenkel hinsichtlich Dimensionierung und Material um einen ausreichenden Winkel gegenüber dem verbindenden Schenkel aufgrund Materialelastizität verschwenkbar, um die Klapphülle im Ganzen entnehmen oder einstecken zu können.

Eine andere Möglichkeit besteht darin, einen gesamten Seitenschenkel parallel gegenüber dem anderen Seitenschenkel nach außen bzw. nach innen verlagern und beaufschlagen zu können, indem beispielsweise ein solcher Schenkel durch ein elastisches Material wie Moosgummi oder ein entsprechend im Querschnitt profiliertes Kunststoffteil wie etwa ein U-Profil auf seiner von der Klapphülle abgewandten Außenseite elastisch gegenüber dem Rest des Halterahmens gefedert ist, um die notwendige Verlagerung aus der Ruheposition heraus durchführen zu können.

Die Bewegung eines einzelnen Halterahmens gegenüber dem gesamten Halter kann durch Verschwenken um eine senkrechte, gleichzeitig als Führungselement zum Stapeln der Halterahmen ausgebildete, Drehachse um wenigstens 90° erfolgen oder durch Herausziehen der einzelnen Halterahmen aus einem gesamten, im wesentlich senkrecht angeordneten, Halter soweit, daß die Fläche unterhalb der zu öffnenden Klapphülle frei ist.

Dabei kann das Einlegen einer Klapphülle in den Halterahmen sowohl durch Einschieben von vorne nach hinten, also in der waagerechten Ebene mit der Achse der Klapphülle voran, geschehen, oder durch Eindrücken der Klapphülle senkrecht von unten nach oben.

In ersterem Fall muß die Vorderseite des Halterahmens und damit auch dessen Seitenschenkel offen sein zum Einschieben der Klapphülle und keine vordere Querwand besitzen, während im letzteren Fall der Halterahmen aus einem allseits umlaufenden, geschlossenen Rahmen bestehen kann, sofern ein Freiraum in der Nähe der Vorderkante der Klapphülle vorhanden ist, um mit dem Finger auf die Oberseite in der Nähe der Vorderkante in der Nähe des Deckelteiles drücken zu können.

Eine Ausführungsform gemäß der Erfindung ist nachfolgend beispielhaft näher erläutert. Es zeigen
- Fig. 1: eine aufgeklappte Klapphülle,
- Fig. 2: eine im Halterahmen aufgenommene, geschlossene Klapphülle in Frontansicht,
- Fig. 3: eine geöffnete Klapphülle in Blickrichtung der Fig. 2,
- Fig. 4a: eine Aufsicht auf einen Halter mit mehreren Halterahmen,
- Fig. 4b: eine Frontansicht des Halters der Fig. 4a,
- Fig. 5: eine Aufsicht auf eine andere Form des Halters und
- Fig. 6: eine Detaildarstellung des Halterahmens in Blickrichtung der Fig. 2 und 3.

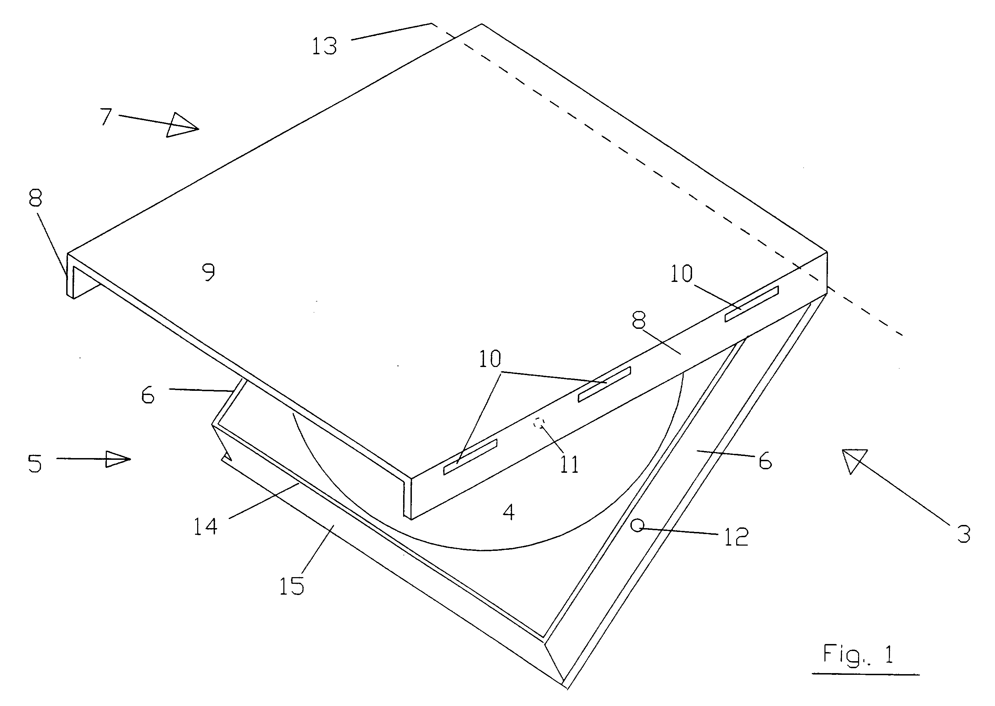

Fig. 1 zeigt eine Klapphülle 3, bei der ein Deckelteil 7 gegenüber einem Bodenteil 5 um eine im hinteren Bereich der Klapphülle 3 parallel zu deren Außenkante verlaufende Achse 13 zueinander klappbar sind. Dabei hat das Deckelteil von der Vorderseite her betrachtet, die Querschnittsform eines nach unten offenen, breiten U-Profiles, so daß die beiden senkrecht verlaufenden Seitenwände 8 des Deckelteiles 7 über eine relativ dünne und breite Deckelplatte 9 miteinander in Verbindung stehen.

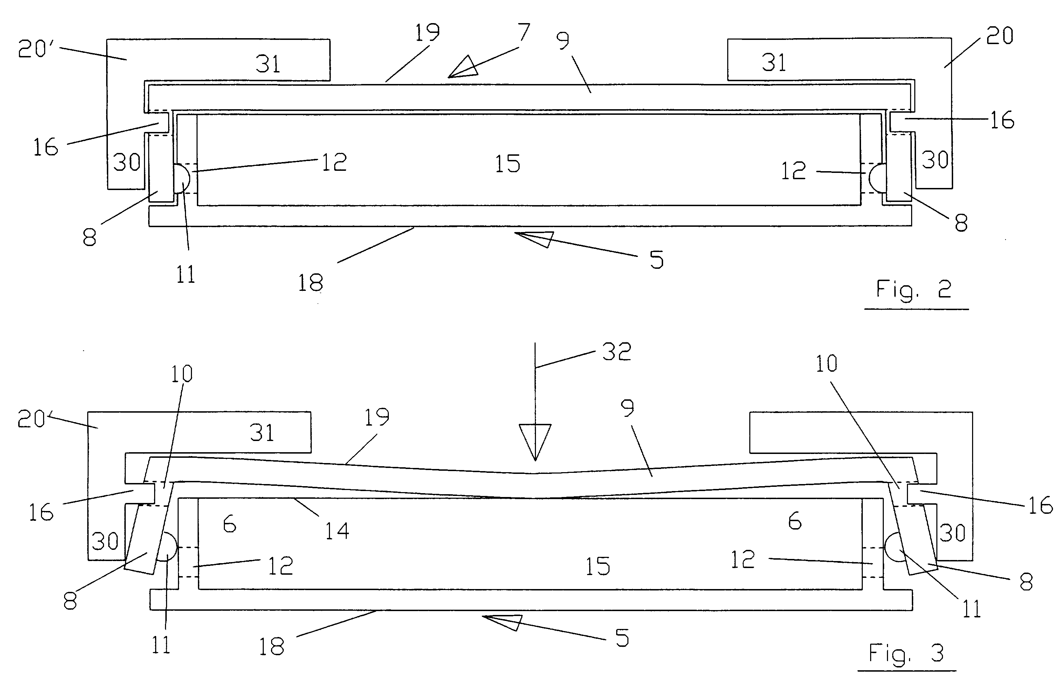

Im geschlossenen Zustand der Klapphülle 3 verlaufen die Seitenwände 8 des Deckelteiles 7 außerhalb der Seitenwände 6 des Bodenteiles 5, wie besser in der Frontansicht der Fig. 2 zu erkennen.

Im geschlossenen Zustand der Klapphülle 3 sind die Seitenwände des Deckelteiles und des Bodenteiles ineinander verrastet, indem in deren Seitenwänden im einen Teil, vorzugsweise in den Seitenwänden 6 des Bodenteiles 5, Löcher 12 ausgebildet sind, in welche im geschlossenen Zustand nach innen gerichtete, entsprechend dimensionierte, etwa halbkugelförmige Erhebungen 11, die auf der Innenseite der Seitenwände 8 des Deckelteiles 7 ausgebildet sind, einrasten.

Ferner weisen die Seitenwände 8 des Deckelteiles 7 der in ihren Abmessungen und in ihrer Form genormten Klapphüllen 3 jeweils drei waagerecht verlaufende, schlitzförmige Durchbrüche 10 knapp unterhalb der Deckelplatte 9 des Deckelteiles 7 auf.

Wie die Frontdarstellungen der Fig. 2 und 3 zeigen, greifen in genau diese Durchbrüche 10 des Deckelteiles 7 nach innen gerichtete Vorsprünge 16 der Halterahmen 2, also der parallel zu den Seitenwänden der Klapphülle verlaufenden Seitenschenkel 20, ein, wodurch das Deckelteil und damit im geschlossenen Zustand der Klapphülle die gesamte Klapphülle 3, im Halterahmen 2 formschlüssig gehalten wird, wie in Fig. 2 dargestellt. Dabei bestehen die Seitenschenkel 20 bzw. 20' aus einem Winkelprofil mit senkrechter Strebe 30 und waagerechter Strebe 31, die sich um die oberen Außenkanten des Deckelteiles 7 herum erstrecken, so daß die waagerechte Strebe 31 oberhalb der Deckelplatte in deren Randbereich verläuft und die senkrechte Strebe 30 entlang der Außenseiten der Seitenwände 8 des Deckelsteiles bis maximal auf Höhe der Unterkante der Klapphülle 3. Die Vorsprünge 16 erstrecken sich dabei von den Innenflächen der senkrechten Streben 30 nach innen und durchdringen die Durchbrüche 10 in den Seitenwänden 8 fast vollständig.

Die in den Halterahmen eingelegte Klapphülle 3 wird wie in Fig. 3 dargestellt, durch Druck in Richtung 32 mit einem Finger etc. auf die Oberseite 19 der Deckelplatte 9 in deren Mitte im Bereich der freien Vorderkante geöffnet.

Durch diesen Druck biegt sich die dünne und damit elastische Deckelplatte 9 so weit durch, daß sie die senkrecht stehende und damit in der senkrechten Richtung kaum elastische Vorderwand 15 des Bodenteiles 5 kontaktiert und so weit nach unten drückt, daß die Rastverbindung zwischen Bodenteil 5 und Deckelteil 7 ausrastet, indem die Seitenwände 8 des Deckelteiles 7 an ihrem unteren Ende nach außen gedrückt werden und die Erhebungen 11 dieser Seitenwände, die im geschlossenen Zustand in den Löchern 12 der Seitenwände 6 des Bodenteiles 5 einrasten, nunmehr ausrasten. Dadurch ist das gesamte Bodenteil 5 entriegelt und klappt um die in Fig. 1 dargestellte Achse 13 frei nach unten weg, bis zu einem begrenzenden Element der Umgebung, etwa dem Federplättchen 50 gemäß Figur 4b. Bei ausreichend Freiraum unterhalb des Halterahmens klappt das Bodenteil 5 bis zur senkrecht herabhängenden Lage nach unten, und bei ausreichendem Abstand zwischen der oberen, hinteren Kante der Klapphülle und der Schwenkachse 24 bzw. den angrenzenden Bauteilen des Halters können auf diese Art und Weise sogar die ineinander gefalteten Klapphüllen der Mehrfach-CD's geöffnet werden.

Wie den Fig. 2 und 3 zu entnehmen ist, muß für das Öffnen der Klapphülle eine ausreichende Bewegungsmöglichkeit der Seitenschenkel 20 zueinander oder ein ausreichend großes Spiel der Innenflächen der Seitenflächen 20, 20' gegenüber den Außenflächen der Seitenwände der Klapphülle vorhanden sein, um ein solches Aufspreizen der Seitenwände 8 des Deckelteiles der Klapphülle und damit ein Öffnen der Klapphülle zu ermöglichen.

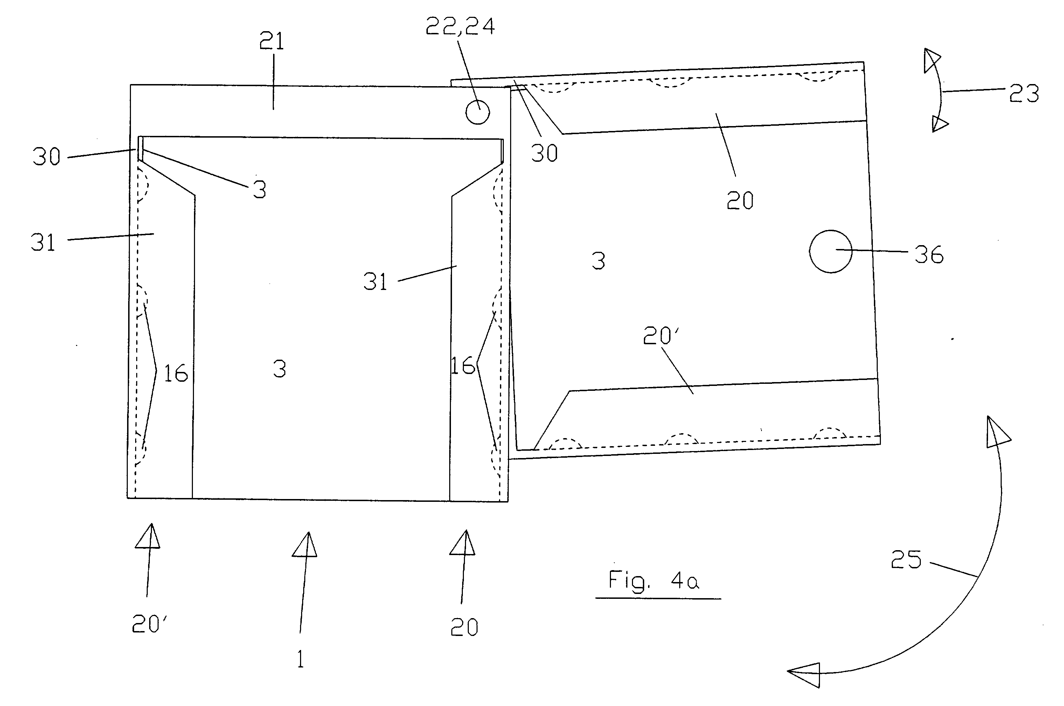

In den Fig. 4a und 4b ist ein aus mehreren Halterahmen 2 bestehender Halter 1 in der Aufsicht bzw. in Fig. 4b in der Seitenansicht dargestellt. Dabei sind die Halterahmen 2 übereinander gestapelt, indem alle Halterahmen 2 in einer ihrer hinteren Ecken identische Hülsen 34, z.B. aus Messing, enthalten, die in den verbindenden Schenkel 21 als Schwenkachse eingeschoben und anschliessend gesichert ist (z.B. durch Ausführen einer Stossbearbeitung an der Messinghülse entgegen deren Einschubrichtung, wodurch radial nach aussen abstehende Späne entstehen, die die Sicherung im Kunststoff bewirken) mit deren Hilfe die Halterahmen 2 auf einer entsprechenden Drehachse 24 aufgesteckt sind, die sich von einer Sockelplatte 33 aus im wesentlichen senkrecht nach oben erstreckt.

Die einzelnen Halterahmen 2 können damit - einschließlich der in ihnen aufgenommenen Klapphüllen 3, aus der fluchtend gestapelten Position entlang der Bahn 25 um ca. 90° seitlich ausgeschwenkt werden, so daß der Raum unterhalb der gesamten Klapphülle 3 im wesentlichen frei ist. Durch Druck in Richtung 32 wird die Klapphülle 3 geöffnet, so daß das Bodenteil 5 der Klapphülle 3 entlang der in Fig. 4b dargestellten Richtung 35 nach unten wegklappt, wobei das Bodenteil 5 durch das Federplättchen 50, welches unten am verbindenden Schenkel 21 angenietet ist, abgefedert wird.

Dabei bewegt sich der bewegliche Schenkel 20 des ausgeklappten Halterahmens 2, wie in Fig. 4a durch den Pfeil 23 dargestellt, geringfügig gegenüber dem restlichen Schwenkrahmen 2 entlang einer Schwenkbewegung 23 um die Schwenkachse 22, die mit der Drehachse 24 identisch ist, nach außen, um das Aufspreizen der Seitenwände 8, wie in Fig. 3 dargestellt, zu ermöglichen, jedoch ohne daß die Vorsprünge 16 vollständig aus den Durchbrüchen 10 ausrasten.

In Fig. 4a ist ferner die einstückige, materialelastische Ausbildung vor allem des obersten Halterahmens 2 im Stapelteil des Halters 1 zu erkennen:

Die waagerechte Strebe 31 ist im Bereich des Überganges der Seitenschenkel 20, 20' zum verbindenden Schenkel 21 nicht oder nur mit äußerst geringfügiger Ausbildung vorhanden, um in diesem Bereich eine elastische Verbiegung zwischen den Seitenschenkeln 20, 20' und dem verbindenden Schenkel 21 um eine im wesentlichen senkrecht verlaufende Achse zuzulassen, was durch die Eigenelastizität des Materials lediglich der senkrechten Strebe 30 ausreichend möglich ist. In der rechten Bildhälfte der Fig. 4a ist ferner symbolisch die Druckfläche 36 eingezeichnet, auf die in etwa der Druck zum Öffnen der Hülle erfolgen sollte.

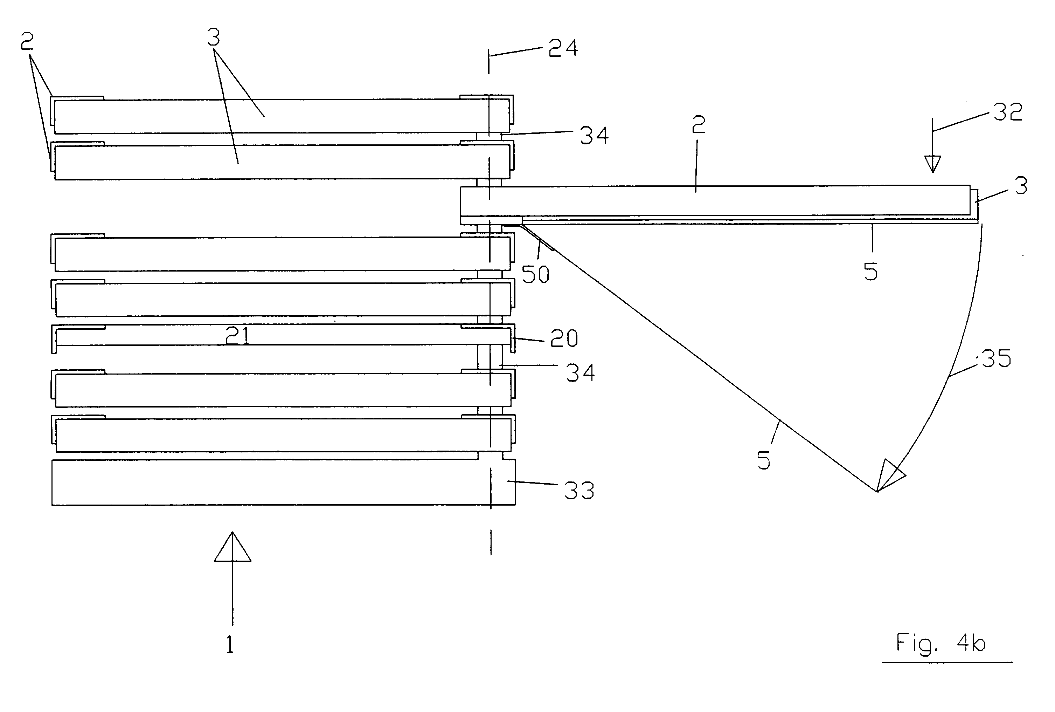

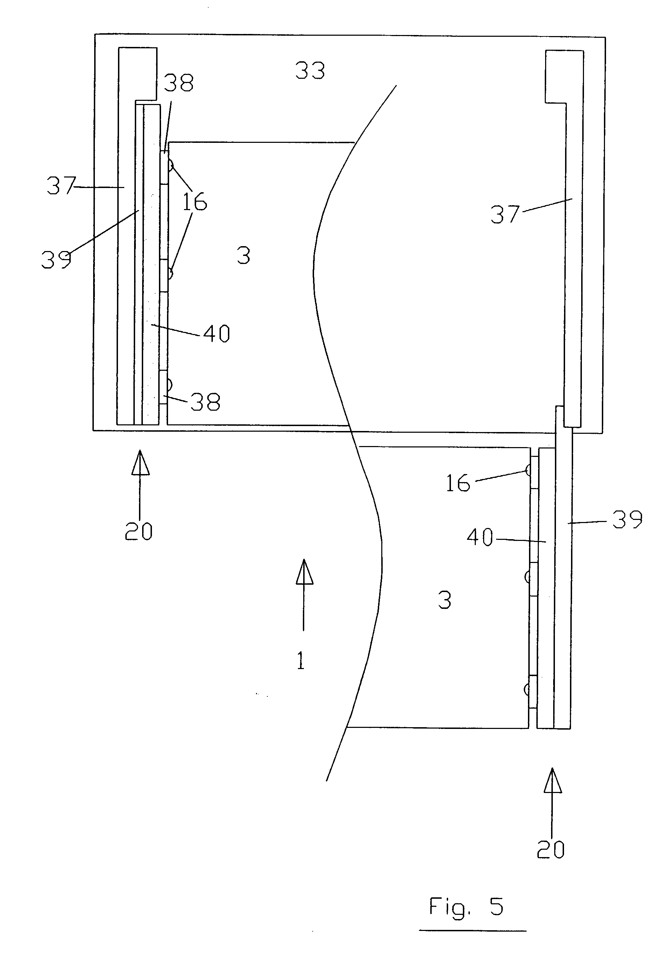

In Fig. 5 ist eine andere Lösung eines Halters 1 eingezeichnet, bei dem der Halter im wesentlichen aus parallel im Abstand nebeneinander nach oben ragenden Seitenwänden 37 besteht, die auf einer Sockelplatte 33 montiert sind. In diesen Seitenwänden 37 sind entlang im wesentlichen waagerecht verlaufender Führungen die Seitenschenkel 20 der Halterahmen 2 geführt, die - wie in Fig. 5 dargestellt - nicht einmal unbedingt einen verbindenden Schenkel aufweisen müssen.

Die Seitenschenkel können dabei nach Art einer Schublade bis zu einem Anschlag so weit herausgezogen werden, daß die in ihnen aufgenommene Klapphülle 3 wiederum vollständig außerhalb des Halters 1 und damit mit Freiraum unterhalb der Klapphülle zu liegen kommt. Dabei ist die Beweglichkeit der Seitenschenkel 20 gegenüber der Klapphülle 3 zum Ausrasten der Vorsprünge 16 dadurch gegeben, daß die Vorsprünge 16, deren Basisteil 38 jeweils eng an den Außenflächen der Seitenwände der Klapphülle 3 anliegen, gegenüber dem festen Teil 39 der Seitenschenkel 20, welches in den Seitenwänden 37 geführt ist, mittels eines elastischen Zwischenteiles 40 federn kann.

Dieses elastische Zwischenteil 40 kann ein massives, an sich elastisches Material wie Gummi, Moosgummi oder ähnliches sein, oder ein im Querschnitt entsprechend profiliertes, z. B. U-förmiges, Zwischenteil, dessen freie und gegeneinander federbare Schenkel einerseits mit den Basisteilen 38 der Vorsprünge 16 und andererseits mit den festen Teilen 39 der Seitenschenkel 20 verbunden oder einstückig ausgeführt ist.

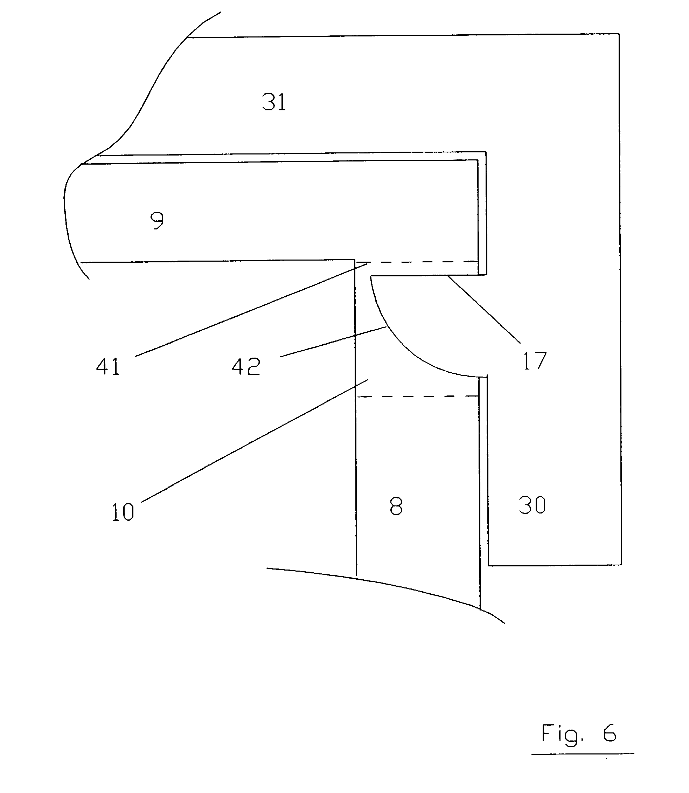

Fig. 6 zeigt eine Detaildarstellung in Blickrichtung der Fig. 2 und 3, aus der zu erkennen ist, daß die Funktionsfläche der Vorsprünge 16 die nach oben gerichtete, im wesentlichen waagerecht verlaufende Anlagefläche 17 der Vorsprünge 16 ist, die bei Druckbelastung der Deckelplatte 9 der Klapphülle 3 von oben her die Gegenhaltung gegen die Unterseite 41 im Inneren des Durchbruches 10 aufbringen muß. Dagegen können die nach unten gerichtete Außenfläche 42 der Vorsprünge 16 abgeschrägt oder abgerundet sein, um dadurch vor allem ein Einlegen der Klapphüllen senkrecht von unten nach oben zu ermöglichen. Beim Einschieben der Klapphüllen von vorne waagerecht nach hinten sind die entsprechend nach vorne gerichteten Anlaufflächen der Vorsprünge 16 vorzugsweise gerundet.

## Patentansprüche

1. Aufbewahrungsvorrichtung mit mehreren benachbart angeordneten Halterahmen (2), die geeignet sind zur Aufnahme von Klapphüllen (3) für Compact-Disks,
- welche aus einem um eine Achse (13) relativ zueinander aufklappbaren Bodenteil (5) und Deckelteil (7) bestehen, wobei sich die Seitenwände (8) des Deckelteiles (7) im geschlossenen Zustand außerhalb der Seitenwände (6) des Bodenteiles (5) befinden,
- mit einer Halteeinrichtung an jedem Halterahmen (2) zur Halterung des Deckelteiles (7) an zumindest einer der beiden parallelen Seiten, die der Achse (13) der Klapphüllen (3) benachbart sind,
- wobei der Halterahmen (2) das Bodenteil (5) an der vollständigen Unterseite und das Deckelteil (7) im Bereich nahe der der Achse (13) gegenüberliegenden Kante freiläßt, und
- wobei jeder Halterahmen (2) bezüglich der übrigen Halterahmen in eine Lage bringbar ist, in der das Bodenteil (5) nach unten ausklappbar ist,
**dadurch gekennzeichnet, daß**
- jeder Halterahmen (2) zwei die Haltevorrichtungen (16) aufweisende Seitenschenkel (20, 20') aufweist, die das Deckelteil so umfassen, daß sie sich jeweils entlang der beiden parallelen Seiten des Deckelteils (7) erstrecken, die der Achse (13) der Klapphülle (3) benachbart sind,
- die einzelnen Halterahmen (2) um eine senkrechte Drehachse (24) verschwenkbar um wenigstens 90° sind,
- sich die Drehachse (24) von einer Sockelplatte (33) aus nach oben erstreckt, und
- die Halterahmen (2) dabei im wesentlichen so vertikal übereinandergestapelt sind, daß in der ausgeschwenkten Lage eines Halterahmens (2) der Raum unterhalb des Halterahmens zum Ausschwenken des Deckelteils (7) auf einige cm frei ist.

2. Aufbewahrungsvorrichtung mit mehreren benachbart angeordneten Halterahmen (2), die geeignet sind zur Aufnahme von Klapphüllen (3) für Compact-Disks,
- welche aus einem um eine Achse (13) relativ zueinander aufklappbaren Bodenteil (5) und Deckelteil (7) bestehen, wobei sich die Seitenwände (8) des Deckelteiles (7) im geschlossenen Zustand außerhalb der Seitenwände (6) des Bodenteiles (5) befinden,
- mit einer Halteeinrichtung an jedem Halterahmen (2) zur Halterung des Deckelteiles (7) an zumindest einer der beiden parallelen Seiten, die der Achse (13) der Klapphüllen (3) benachbart sind,
- wobei der Halterahmen (2) das Bodenteil (5) an der vollständigen Unterseite und das Deckelteil (7) im Bereich nahe der der Achse (13) gegenüberliegenden Kante freiläßt, und
- wobei jeder Halterahmen (2) bezüglich der übrigen Halterahmen in eine Lage bringbar ist, in der das Bodenteil (5) nach unten ausklappbar ist,
**dadurch gekennzeichnet, daß**
- jeder Halterahmen (2) zwei die Haltevorrichtungen (16) aufweisende Seitenschenkel (20, 20') aufweist, die das Deckelteil so umfassen, daß sie sich jeweils entlang der beiden parallelen Seiten des Deckelteils (7) erstrecken, die der Achse (13) der Klapphülle (3) benachbart sind,
- die einzelnen Halterahmen (2) aus einem senkrecht angeordneten gesamten Halter entlang waagerechter Führungen herausziehbar sind, und
- die Halterahmen (2) dabei im wesentlichen vertikal so übereinandergestapelt sind, daß in der herausgezogenen Lage eines Halterahmens (2) der Raum unterhalb des Halterahmens zum Ausschwenken des Deckelteils (7) auf einige cm frei ist.

3. Halter nach Anspruch 1 oder 2,
**dadurch gekennzeichnet, daß**
als Halteeinrichtung Vorsprünge (16) des Halterahmens (2) in Durchbrüche (10), die in den Seitenwänden (8) des Deckelteils (7) unterhalb der die Seitenwände verbindenden Deckelplatte angeordnet sind, eingreifen.

4. Halter nach Anspruch 3,
**dadurch gekennzeichnet, daß**
die auf gegenüberliegenden Seiten der Klapphüllen (3) angeordneten, gegeneinander gerichteten Vorsprünge (16) von der in die Durchbrüche (10) eingreifenden Ruhelage soweit voneinander wegbewegbar sind, daß die Klapphülle (3) aus dem Halterahmen (2) entfernbar ist.

5. Halter nach einem der vorhergehenden Ansprüche,
**dadurch gekennzeichnet, daß**
die Vorsprünge (16) nach oben hin eine im wesentlichen waagerechte Anlagefläche (17) aufweisen.

6. Halter nach einem der vorhergehenden Ansprüche,
**dadurch gekennzeichnet, daß**
von der freien äußeren Kante der Vorsprünge (16) aus die Unterseite der Vorsprünge (16) schräg nach unten und dem Inneren des Halters nach außen verläuft.

7. Halter nach einem der vorhergehenden Ansprüche,
**dadurch gekennzeichnet, daß**
- der Halterahmen (2) einen die Seitenschenkel (20,20') verbindenden Schenkel (21) aufweist und
- die Seitenschenkel (20,20') des Halterahmens (2) aus einem Winkelprofil bestehen, deren waagerechter Teil auf der Oberseite (19) und deren senkrechter Teil an den Außenflächen der Seitenwände (8) des Deckelteiles (7) der Klapphülle (3) anliegt und die Vorsprünge (16) aufweist.

8. Halter nach Anspruch 7,
**dadurch gekennzeichnet, daß**
der verbindende Schenkel (21) in der Nähe der Achse (13) der Klapphülle (3) parallell zur Achse (13) verläuft.

9. Halter nach Anspruch 7 oder 8
**dadurch gekennzeichnet, daß**
- wenigstens einer der Seitenschenkel (20,20') gegenüber dem Rest des Halterahmens (2) um eine hinter der Achse (13) der Klapphülle (3) liegende, im wesentlichen senkrecht zum Halterahmen (2) verlaufende Schwenkachse (22) verschwenkbar ist,
- der bzw. die beweglichen Schenkel (20) des Halterahmens (2) mittels Federkraft in ihre mit dem freien Ende des Schenkels (20) die Klapphülle (3) eng umschließende Ruhelage gedrückt werden, und
- eine Feder als Druckfeder im Inneren des verbindenden Schenkels (21) auf der von der Klapphülle (3) abgewandten Seite der Schwenkachse (22) ausgebildet ist.

10. Halter nach einem der vorhergehenden Ansprüche 7 bis 9
**dadurch gekennzeichnet, daß**
wenigstens ein Seitenschenkel (20) relativ zum anderen Seitenschenkel (20') parallel angenähert und entfernt werden kann.

11. Halter nach einem der vorhergehenden Ansprüche 7 bis 10
**dadurch gekennzeichnet, daß**
wenigstens einer der Seitenschenkel (20, 20') um parallel zur Längsrichtung des Seitenschenkels verlaufende Kippachse gekippt werden kann, so daß ein Einlegen der Klapphüllen (3) in den Halterahmen (2) senkrecht von unten nach oben möglich ist.

12. Halter nach einem der vorhergehenden Ansprüche,
**dadurch gekennzeichnet, daß**
die in Einführrichtung der Klapphüllen (3) gerichteten Anlaufflächen der Vorsprünge (16) abgeschrägt bzw. gerundet sind.

13. Halter nach einem der vorhergehenden Ansprüche 7 bis 12
**dadurch gekennzeichnet, daß**
der bewegliche Schenkel (20) durch Materialelastizität gegenüber dem Rest des Halterahmens (2) beweglich ist.

14. Halter nach Anspruch 1 und einem der vorherstehenden Ansprüche 7 bis 13
**dadurch gekennzeichnet, daß**
die Halterahmen (2) auf die Drehachse (24) im Verbindungsbereich des verbindenden Schenkels (21) zu einem der Seitenschenkel (20) aufgesteckt sind.

15. Halter nach einem der vorherstehenden Ansprüche,
**dadurch gekennzeichnet, daß**
zur Begrenzung der Abklappbewegung des Bodenteiles (30) der Klapphülle (3) ein Federplättchen (50) in der Umgebung der Klapphülle angeordnet ist.

16. Halter nach einem der vorherstehenden Ansprüche,
**dadurch gekennzeichnet, daß**
an der Unterseite des Halterahmens (2), insbesondere an dessen verbindendem Schenkel (21), ein in den Bereich unterhalb der Klapphüllen hineinragendes Federplättchen (50) angeordnet ist, um beim Öffnen der Klapphülle deren nach unten fallendes Bodenteil abzufedern.

## Claims

1. A storage arrangement having a plurality of adjacently arranged holding frames (2) which are suitable for accommodating hinged cases (3) for compact discs.
- which comprise a bottom portion (5) and a lid portion (7) which can be hinged open relative to each other about an axis (13), wherein the side walls (8) of the lid portion (7) in the closed condition are disposed outside the side walls (6) of the bottom portion (5).
- having a holding device on each holding frame (2) for holding the lid portion (7) at at least one of the two parallel sides which are adjacent to the axis (13) of the hinged cases (3).
- wherein the holding frame (2) leaves free the bottom portion (5) at the whole of the underside and the lid portion (7) in the region adjacent the edge opposite to the axis (13), and
- wherein each holding frame (2) can be brought with respect to the other holding frames into a position in which the bottom portion (5) can be hinged out downwardly.
characterised in that
- each holding frame (2) has two side limbs (20, 20') which have the holding devices (16) and which so embrace the lid portion that they each extend along a respective one of the two parallel sides of the lid portion (7), which are adjacent to the axis (13) of the hinged case (3).
- the individual holding frames (2) are pivotable through at least 90° about a perpendicular rotary axis (24).
- the rotary axis (24) extends upwardly from a base plate (33), and
- in that arrangement the holding frames (2) are substantially so stacked in vertically mutually superposed relationship that in the outwardly pivoted position of a holding frame (2) the space beneath the holding frame is free for pivoting out the lid portion (7) to some centimetres.

2. A storage arrangement having a plurality of adjacently arranged holding frames (2) which are suitable for accommodating hinged cases (3) for compact discs.
- which comprise a bottom portion (5) and a lid portion (7) which can be hinged open relative to each other about an axis (13), wherein the side walls (8) of the lid portion (7) in the closed condition are disposed outside the side walls (6) of the bottom portion (5),
- having a holding device on each holding frame (2) for holding the lid portion (7) at at least one of the two parallel sides which are adjacent to the axis (13) of the hinged cases (3),
- wherein the holding frame (2) leaves free the bottom portion (5) at the whole of the underside and the lid portion (7) in the region adjacent the edge opposite to the axis (13), and
- wherein each holding frame (2) can be brought with respect to the other holding frames into a position in which the bottom portion (5) can be hinged out downwardly,
characterised in that
- each holding frame (2) has two side limbs (20, 20') which have the holding devices (16) and which so embrace the lid portion that they each extend along a respective one of the two parallel sides of the lid portion (7), which are adjacent to the axis (13) of the hinged case (3),
- the individual holding frames (2) can be pulled out along horizontal guides from a perpendicularly arranged overall holder, and
- in that arrangement the holding frames (2) are substantially so stacked in vertically mutually superposed relationship that in the outwardly pulled position of a holding frame (2) the space beneath the holding frame is free for pivoting out the lid portion (7) to some centimetres.

3. A holder according to claim 1 or claim 2 characterised in that as the holding device projections (16) on the holding frame (2) engage into openings (10) arranged in the side walls (8) of the lid portion (7) beneath the lid panel which connects the side walls.

4. A holder according to claim 3 characterised in that projections (16) which are arranged on mutually opposite sides of the hinged cases (3) and which are directed towards each other are movable away from the rest position of engaging into the openings (10) and away from each other to such an extent that the hinged case (3) is removable from the holding frame (2).

5. A holder according to one of the preceding claims characterised in that the projections (16) have upwardly a substantially horizontal contact surface (17).

6. A holder according to one of the preceding claims characterised in that from the free outer edge of the projections (16) the underside of the projections (16) extends inclinedly downwardly and outwardly from the interior of the holder.

7. A holder according to one of the preceding claims characterised in that
- the holding frame (2) has a limb (21) which connects the side limbs (20, 20'), and
- the side limbs (20, 20') of the holding frame (2) comprise an angular profile whose horizontal part bears on the top side (19) and whose perpendicular part bears against the outside surfaces of the side walls (8) of the lid portion (7) of the hinged case (3) and has the projections (16).

8. A holder according to claim 7 characterised in that the connecting limb (21) extends parallel to the axis (13) of the hinged case (3) in the proximity of the axis (13).

9. A holder according to claim 7 or claim 8 characterised in that
- at least one of the side limbs (20, 20') is pivotable with respect to the rest of the holding frame (2) about a pivot axis (22) which is disposed behind the axis (13) of the hinged case (3) and which extends substantially perpendicularly to the holding frame (2),
- the movable limb or limbs (20) of the holding frame (2) are urged by means of spring force into their rest position of closely embracing the free end of the limb (20) of the hinged case (3), and
- a spring is in the form of a compression spring in the interior of the connecting limb (21) on the side of the pivot axis (22) remote from the hinged case (3).

10. A holder according to one of claims 7 to 9 characterised in that at least one side limb (20) can be moved towards and away from the other side limb (20') in parallel relationship therewith.

11. A holder according to one of claims 7 to 10 characterised in that at least one of the side limbs (20, 20') can be tilted about a tilt axis extending parallel to the longitudinal direction of the side limb, so that insertion of the hinged cases (3) into the holding frame (2) is possible perpendicularly from below in an upward direction.

12. A holder according to one of the preceding claims characterised in that the run-on surfaces of the projections (16), which are directed in the insertion direction of the hinged cases (3), are bevelled or rounded.

13. A holder according to one of claims 7 to 12 characterised in that the movable limb (20) is movable by material elasticity with respect to the rest of the holding frame (2).

14. A holder according to claim 1 and claims 7 to 13 characterised in that the holding frames (2) are fitted on to the rotary axis (24) in the connecting region of the connecting limb (21) to one of the side limbs (20).

15. A holder according to one of the preceding claims characterised in that to limit the hinging-away movement of the bottom portion (30) of the hinged case (3) a spring plate portion (50) is arranged in the region around the hinged case.

16. A holder according to one of the preceding claims characterised in that arranged at the underside of the holding frame (2), in particular at the connecting limb (21) thereof, is a spring plate portion (50) which projects into the region beneath the hinged cases in order to cushion the downwardly falling bottom portion of the hinged case upon opening thereof.

## Revendications

1. Dispositif de rangement comprenant plusieurs cadres support (2) disposés les uns à côté des autres aptes à recevoir des boîtiers (3) de disques compacts,
- boîtiers qui se composent d'une partie formant fond (5) s'ouvrant en pivotant autour d'un axe (13) et d'une partie formant couvercle (7), les parois latérales (8) de la partie formant couvercle (7) à l'état fermé se trouvant à l'extérieur des parois latérales (6) de la partie formant fond (5),
- comprenant un dispositif de retenue sur chaque cadre support (2) pour le maintien de la partie formant couvercle (7) sur au moins l'un des deux côtés parallèles voisins de l'axe (13) des boîtiers de CD (3),
- le cadre support (2) libérant la partie formant fond (5) sur toute la face inférieure et la partie formant couvercle (7) dans la zone proche du bord opposé à l'axe (13), et
- chaque cadre support (2) pouvant être amené par rapport aux cadres support restants, dans une position dans laquelle la partie formant fond (5) peut être rabattue vers le bas,
caractérisé en ce que
- chaque cadre support (2) présente deux branches latérales (20, 20') comportant les dispositifs de retenue (16) et entourant la partie formant fond de manière à s'étendre chacune le long de l'un des côtés parallèles de la partie formant couvercle (7) qui sont voisines de l'axe (13) du boîtier de CD (3),
- chacun des cadres support (2) peut pivoter d'au moins 90° autour d'un axe de rotation vertical (24),
- l'axe de rotation (24) s'étend vers le haut en partant d'une plaque formant socle (33), et
- les cadres support (2) sont empilés sensiblement à la verticale les uns au-dessus des autres, de sorte qu'en position pivotée sortie d'un cadre support (2), l'espace en dessous du cadre support soit dégagé sur quelques centimètres pour le pivotement de la partie formant couvercle (7).

2. Dispositif de rangement comprenant plusieurs cadres support (2) disposés les uns à côté des autres aptes à recevoir des boîtiers (3) de disques compacts,
- boîtiers qui se composent d'une partie formant fond (5) s'ouvrant en pivotant autour d'un axe (13) et d'une partie formant couvercle (7), les parois latérales (8) de la partie formant couvercle (7) à l'état fermé se trouvant à l'extérieur des parois latérales (6) de la partie formant fond (5),
- comprenant un dispositif de retenue sur chaque cadre support (2) pour le maintien de la partie formant couvercle (7) sur au moins l'un des deux côtés parallèles voisins de l'axe (13) des boîtiers de CD (3),
- le cadre support (2) libérant la partie formant fond (5) sur toute la face inférieure et la partie formant couvercle (7) dans la zone proche du bord opposé à l'axe (13), et
- chaque cadre support (2) pouvant être amené par rapport aux cadre support restant, dans une position dans laquelle la partie formant fond (5) peut être rabattue vers le bas,
caractérisé en ce que
- chaque cadre support (2) présente deux branches latérales (20, 20') comportant les dispositifs de retenue (16) et entourant la partie formant fond de manière à s'étendre chacune le long de l'un des côtés parallèles de la partie formant couvercle (7) qui sont voisins de l'axe (13) du boîtier de CD (3),
- chacun des cadres support (2) est extractible d'un support d'ensemble disposé verticalement le long de guides horizontaux
- les cadres support (2) sont empilés sensiblement à la verticale les uns au-dessus des autres, de sorte qu'en position pivotée sortie d'un cadre support (2), l'espace en dessous du cadre support soit dégagé sur quelques centimètres pour le pivotement de la partie formant couvercle (7).

3. Support selon la revendication 1 ou 2,
caractérisé en ce que
- des saillies (16) du cadre support (2), faisant office de dispositif de retenue, s'engagent dans des percées (10) qui sont disposées dans les parois latérales (8) de la partie formant couvercle (7) en dessous de la plaque formant couvercle reliant les parois latérales.

4. Support selon la revendication 3,
caractérisé en ce que
les saillies (16), disposées sur des côtés opposés des boîtiers de CD (3), et tournées les unes vers les autres, peuvent être éloignées de la position de repos engagée dans les percées (10) suffisamment loin pour que le boîtier de CD (3) puisse être enlevé du cadre support (2).

5. Support selon l'une des revendications précédentes,
caractérisé en ce que
les saillies (16) présentent vers le haut une surface d'application sensiblement horizontale (17).

6. Support selon l'une des revendications précédentes,
caractérisé en ce qu'
en partant du bord externe libre des saillies (16), la face inférieure des saillies (16) s'étend inclinée vers le bas et depuis l'intérieur du support vers l'extérieur.

7. Support selon l'une des revendications précédentes,
caractérisé en ce que
- le cadre support (2) présente une branche (21) reliant les branches latérales (20, 20') et
- les branches latérales (20, 20') du cadre support (2) se composent d'un profilé angulaire, dont la partie horizontale repose sur la face supérieure (19) et la partie verticale sur les surfaces externes des parois latérales (8) de la partie formant couvercle (7) du boîtier de CD (3) et qui présente des saillies (16).

8. Support selon la revendication 7,
caractérise en ce que
la branche de liaison (21) s'étend à proximité de l'axe (13) du boîtier de CD (3) parallèlement à l'axe (13).

9. Support selon la revendication 7 ou 8,
caractérisé en ce que
- au moins l'une des branches latérales (20, 20') peut pivoter par rapport au reste du cadre support (2) autour d'un axe de pivotement (22) se trouvant derrière l'axe (13) du boîtier de CD (3) et s'étendant sensiblement perpendiculairement au cadre support (2),
- la notamment les branches mobiles (20) du cadre support (2) sont comprimées au moyen d'une force de ressort dans leur position de repos dans laquelle l'extrémité libre de la branche (20) entoure étroitement le boîtier de CD (3), et
- un ressort fait office de ressort de pression à l'intérieur de la branche de liaison (21) sur la face de l'axe de pivotement (22), qui est détournée du boîtier de CD (3).

10. Support selon l'une des revendications précédentes 7 à 9,
caractérisé en ce qu'
au moins une branche latérale (20) peut être approchée et éloignée parallèlement par rapport à l'autre branche latérale (20').

11. Support selon l'une des revendications précédentes 7 à 10, caractérisé en ce qu'
au moins l'une des branches latérales (20, 20') peut être basculée autour d'un axe de basculement s'étendant parallèlement au sens de la longueur de la branche latérale de sorte qu'une insertion des boîtiers CD (3) soit possible de bas en haut verticalement dans le cadre support (2).

12. Support selon l'une des revendications précédentes, caractérisé en ce que
les surfaces d'accroche des saillies (16), dirigées dans le sens d'insertion des boîtiers de CD (3) sont chanfreinées notamment arrondies.

13. Support selon l'une des revendications précédentes, 7 à 12, caractérisé en ce qu'
au moins une branche latérale (20) est mobile du fait de l'élasticité de la matière par rapport au reste du cadre support (2).

14. Support selon l'une des revendications précédentes, 7 à 12, caractérisé en ce que
les cadres support (2) sont montés sur l'axe de rotation (24) dans la zone de liaison entre la branche de liaison (21) et l'une des branches latérales (20).

15. Support selon l'une des revendications précédentes, caractérisé en ce que
pour la délimitation du mouvement d'ouverture de la partie formant fond (30) du boîtier de CD (3), une petite membrane formant ressort (50) est disposée à proximité du boîtier de CD .

16. Support selon l'une des revendications précédentes, caractérisé en ce que
sur la face inférieure du cadre support (2), en particulier sur sa branche de liaison (21) est disposée une petite membrane formant ressort (50) qui s'engage dans la zone en dessous des boîtiers de CD pour amortir la partie formant fond tombant vers le bas à l'ouverture du boîtier de CD.
